# EUROPEAN PATENT APPLICATION

(11) **EP 1 790 526 A2**
(43) Date of publication of application: **30.05.2007**
(21) Application number: 06024275.7
(22) Date of filing: 23.11.2006
(51) Int. Cl.: B60P 3/22

(54) **Trailer with a plurality of tanks**

(30) Priority: 23.11.2005 US 286798
(71) Applicant: ROLLIGON CORPORATION, Anderson TX 77830 (US)
(72) Inventor: Dearing, Mike, Anderson, Texas 77830 (US); Toler, Scott, College Station, Texas 77845 (US)
(74) Representative: Glawe, Delfs, Moll

(57) **Abstract**

The invention relates to distribution systems and methods of their use. In some embodiments, the invention relates to a truck and trailer comprising a platform that is configured to allow movement of containers including, but not limited to, a tank. In some embodiments, the invention relates to chemical distribution units that are configured such that a plurality of chemical tanks (22), together or individually, can be moved partially over the edge of a platform (25), including but not limited to, over the edge of a trailer. In another embodiment, the invention relates to a chemical distribution system constructed on the deck of a trailer comprising first plurality of chemical tanks and a second plurality of chemical tanks configured such that the first and second plurality of tanks can be moved sufficiently over the edge of the trailer deck to allow a person to access the top of each of the individual tanks.

## Description

### FIELD OF INVENTION

The invention relates to distribution systems and methods of their use. In some embodiments, the invention relates to a truck and trailer comprising a platform that is configured to allow movement of containers including, but not limited to, a tank. In some embodiments, the invention relates to chemical distribution units that are configured such that a plurality of chemical tanks, together or individually, can be moved partially over the edge of a platform, including but not limited to, over the edge of a trailer. In another embodiment, the invention relates to a chemical distribution system constructed on the deck of a trailer comprising first plurality of chemical tanks and a second plurality of chemical tanks configured such that the first and second plurality of tanks can be moved sufficiently over the edge of the trailer deck to allow a person to access the top of each of the individual tanks.

### BACKGROUND

Chemical distribution or additive units are primarily used in oilfield operations. A chemical distribution unit is built on trailer deck so that a variety of liquids and solids can be transported to various, sometimes difficult to reach, locations. The chemicals are stored in separate tanks or pallets attached to the deck of the trailer. Federal and State laws limit physical dimension of trailers that can be transported on interstate highways. In order to maximize the amounts of chemicals that can be carried on the trailer, the size of the tanks for chemical storage are generally configured to fill the space of the trailer deck.

Before, during and, after dispensing chemicals from the tanks, it is desirable to verify the quantity of a chemical remaining in the tanks. The tanks may contain gauges for making these measurements; however, due to exposure to a variety of harsh chemical substances, sometimes gauges malfunction. If a gauge malfunctions it can cause the dispersing unit to fail to dispense the proper amount of a desired chemical. In order to avoid such a situation, it is desirable to regularly verify the quantity of chemicals remaining in the tanks by methods that require physical access to the interior compartments. Because the trailer contains numerous chemical tanks that fill the space of the trailer deck, as a practical matter, it becomes difficult to access the top of the tanks in order to inspect the inner compartments. Ladders or other access platforms can be used to access the top of the tanks; however, using access platforms is often undesirable because of safety concerns particularly when the trailer is located in rugged terrain. Thus, there is a need to construct trailers for transportation of chemical tanks that are configured such that access to the top of the tanks can be accomplished in a safe manor and that allow for maximum storage capacity on a trailer deck that is size restricted.

### SUMMARY OF THE INVENTION

The invention relates to distribution systems and methods of their use. In some embodiments, the invention relates to a truck and trailer comprising a platform that is configured to allow movement of containers including, but not limited to, a tank. In some embodiments, the invention relates to chemical distribution units that are configured such that a plurality of chemical tanks, together or individually, can be moved partially over the edge of a platform, including but not limited to, over the edge of a trailer. In another embodiment, the invention relates to a chemical distribution system constructed on the deck of a trailer comprising first plurality of chemical tanks and a second plurality of chemical tanks configured such that the first and second plurality of tanks can be moved sufficiently over the edge of the trailer deck to allow a person to access the top of each of the individual tanks.

In some embodiments, the invention relates to a system for moving and supporting containers comprising: a) a plurality of trays, each configured to support a container; b) a track for transporting said trays over a platform. In further embodiments, said track comprises a conveyor track. In further embodiments, said track comprises rollers. In further embodiments, said track is coupled to a platform. In further embodiments, said platform is a trailer.

In some embodiments, the invention relates to a chemical distribution system comprising: a) a trailer sufficient for transportation on a public highway comprising a deck; b) a plurality of chemical tank trays; c) a hydraulic system comprising: i) a hydraulic pump; ii) a hydraulic valve; and iii) a plurality of hydraulic cylinders and pistons; wherein said plurality of said hydraulic cylinders and pistons are configured between said trailer deck and said plurality of chemical tank trays; and wherein application of pressure controlled by said hydraulic valve slides a portion of a chemical tank tray over a edge of said deck.

In some embodiments, the invention relates to a chemical distribution system comprising: a) a trailer sufficient for transportation on a public highway comprising a deck having a first area running along a right side edge of said deck and a second area running along a left side edge of said deck; b) a first plurality of chemical tanks and a second plurality of chemical tanks; c) a first plurality of chemical tank trays and a second plurality of chemical tank trays d) a hydraulic system comprising i) a hydraulic pump; ii) a hydraulic valve; and iii) a plurality of hydraulic cylinders and pistons; wherein said first plurality of chemical tank trays secure said first plurality of said chemical tanks to said first area; wherein said second plurality of chemical tank tray slides secure said second plurality of said chemical tanks to said second area; wherein said plurality of said hydraulic cylinders and pistons are configured between said trailer deck and said first and second plurality of chemical tank trays; and wherein application of pressure controlled by said hydraulic valve slides a portion of said first plurality of chemical tanks over said right side edge of said deck and application of pressure controlled by said hydraulic valve slides a portion of said second plurality of tanks over said left side edge of said deck. In further embodiments, some of the tray slides use plastic slide bearings, and some use rollers.

In some embodiments, the invention relates to a chemical distribution system comprising: a) a deck having a first area running along a right side edge of the deck and a second area running along a left side edge of the deck; b) a plurality of roller or linear bearings; c) a first plurality of chemical tanks and a second plurality of chemical tanks; and d) a first plurality of chemical tank trays and a second plurality of chemical tank trays; wherein said first plurality of chemical tank trays secure said first plurality of said chemical tanks to said first area; wherein said second plurality of chemical tank trays secure said second plurality of said chemical tanks to said second area; wherein said roller bearings are configured between said trailer deck and said first and second plurality of chemical tank trays; and wherein application of sufficient force to said first plurality of chemical tanks slides a portion of said first plurality of chemical tanks over said right side edge of said deck and application of sufficient force to said second plurality of tank slides a portion said second plurality of tanks over said left side edge of said deck.

In some embodiments, the invention relates to a method comprising: providing a distribution system disclosed herein and sliding a tank over the edge of a platform.

In some embodiments, the invention relates to a method comprising: providing a system for moving and supporting containers comprising: a) a plurality of trays, each configured to support a container; b) a track for transporting said trays over a platform; and sliding a tank over the edge of a platform. In further embodiments, said track comprises a conveyor track. In further embodiments, said track comprises rollers. In further embodiments, said track is coupled to a platform. In further embodiments, said platform is a trailer.

It is not intended that the present invention be limited by the precise means by which the tanks are moved. In one embodiment, the tanks are moved by mechanical mechanisms or by hand. In another embodiment, a hydraulic system is used. In some embodiments, the invention relates to a method comprising: a) providing chemical distribution system comprising: i) a trailer sufficient for transportation on a public highway comprising a deck; ii) a plurality of chemical tank trays; iii) a hydraulic system comprising a plurality of hydraulic cylinders and pistons; wherein said plurality of said hydraulic cylinders and pistons are configured between said trailer deck and said plurality of chemical tank trays; and wherein application of pressure controlled by said hydraulic valve slides at least one of said plurality of chemical tank trays over a edge of said deck and b) sliding a tank over said deck.

It is not intended that the present invention be limited to a particular vehicle. In some embodiments, the invention relates to a method comprising: a) providing a chemical distribution system comprising: i) a trailer sufficient for transportation on a public highway comprising a deck having a first area running along a right side edge of said deck and a second area running along a left side edge of said deck; ii) a first plurality of chemical tanks and a second plurality of chemical tanks; iii) a first plurality of chemical tank trays and a second plurality of chemical tank trays; iv) a hydraulic system comprising a plurality of hydraulic cylinders and pistons; wherein said first plurality of chemical tank trays secure said first plurality of said chemical tanks to said first area; wherein said second plurality of chemical tank tray slides secure said second plurality of said chemical tanks to said second area; wherein said plurality of said hydraulic cylinders and pistons are configured between said trailer deck and said first and second plurality of chemical tank trays; and wherein application of pressure controlled by said hydraulic valve slides at least one of said first plurality of chemical tanks over said right side edge of said deck and application of pressure controlled by said hydraulic valve slides at least one of said second plurality of tanks over said left side edge of said deck; and b) sliding at least one tank over said edge of said deck. Other arrangements of the hydraulics are possible, such as attaching the piston directly to the deck and/or tank.

In some embodiments, no separate rack on the deck is necessary as bearings can be created from, in, or on the deck. In some embodiments, the tank is moved on a bed of air. In some embodiments the tank is moved by a set of rotating wheals that push as pull the tank from one location to another.

It is not intended that the present invention be limited to a particular number of rows of tanks. In some embodiments, the invention relates to a method comprising: providing a chemical distribution system comprising: a) a deck having a first area running along a right side edge of the deck and a second area running along a left side edge of the deck; b) a plurality of linear bearings; c) a first plurality of chemical tanks and a second plurality of chemical tanks; and d) a first plurality of chemical tank trays and a second plurality of chemical tank trays; wherein said first plurality of chemical tank trays secure said first plurality of said chemical tanks to said first area; wherein said second plurality of chemical tank trays secure said second plurality of said chemical tanks to said second area; wherein said linear bearings are configured between said trailer deck and said first and second plurality of chemical tank trays; and wherein application of sufficient force to said first plurality of chemical tanks slides at least one of said first plurality of chemical tanks over said right side edge of said deck and application of sufficient force to said second plurality of tank slides at least one of said second plurality of tanks over said left side edge of said deck; and sliding at least one chemical tank over the edge of said deck.

In some embodiments, the invention relates to a method accessing chemical tanks on a trailer comprising: a) providing a trailer comprising a deck, a plurality of chemical tanks, a plurality of chemical tank trays holding said plurality of chemical tanks, a plurality of linear bearings attached to a rack wherein said rack is attached to said deck, b) resting said plurality of chemical tanks entirely within an area of said deck; and c) moving a portion of said tanks over the area of said deck.

In some embodiments, a chemical distribution system comprising: a) a trailer sufficient for transportation on a public highway comprising a deck having a first area running along a right side edge of said deck and a second area running along a left side edge of said deck; b) a first plurality of chemical tanks and a second plurality of chemical tanks; c) a first plurality of chemical tank trays and a second plurality of chemical tank trays, d) a hydraulic system comprising a plurality of hydraulic cylinders and pistons; wherein said first plurality of chemical tank trays secure said first plurality of said chemical tanks to said first area; wherein said second plurality of chemical tank tray slides secure said second plurality of said chemical tanks to said second area; wherein said plurality of said hydraulic cylinders and pistons are configured to said first and second plurality of chemical tank trays and under said trailer deck; and wherein application of pressure controlled by said hydraulic valve slides at least one of said first plurality of chemical tanks over said right side edge of said deck and application of pressure controlled by said hydraulic valve slides at least one of said second plurality of tanks over said left side edge of said deck.

It is not intended that the present invention be limited to the manner in which the trays contain the tanks. In one embodiment, the tanks are secured by friction, gravitation and sidewalls. In one embodiment, the tanks are secured by at least one strap.

### BRIEF DESCRIPTION OF THE DRAWINGS

Figure 1 is an illustration of one embodiment of a distribution unit with a trailer for transportation on a public highway.
Figure 2 is an illustration of one embodiment of a distribution unit with a trailer where application of pressure controlled by a hydraulic valve slides the chemical tank trays over the edge of the deck.
Figure 3 is an illustration of one embodiment of a distribution unit with a trailer where application of pressure controlled by hydraulic valve slides the chemical tanks over the edge of the deck allowing a person to access the top of the tanks.
Figure 4 is an illustration of one embodiment of a distribution unit where a tank is removed from the unit.
Figure 5A is an illustration of the tank tray system in Figure 4 which is in an open position used to extend the tank tray (and tank) over a platform.
Figure 5B is an illustration of the a tank tray system in Figure 4 which is in a closed position used pull the tank tray (and tank) back into the area of a platform.
Figure 6 is a schematic illustration of one embodiment of a hydraulic system used in a distribution unit.

### DETAILED DESCRIPTION OF THE INVENTION

The invention relates to distribution systems and methods of their use. In some embodiments, the invention relates to a truck and trailer comprising a platform that is configured to allow movement of containers including, but not limited to, a tank. In some embodiments, the invention relates to chemical distribution units that are configured such that a plurality of chemical tanks, together or individually, can be moved partially over the edge of a platform, including but not limited to, over the edge of a trailer. In another embodiment, the invention relates to a chemical distribution system constructed on the deck of a trailer comprising first plurality of chemical tanks and a second plurality of chemical tanks configured such that the first and second plurality of tanks can be moved sufficiently over the edge of the trailer deck to allow a person to access the top of each of the individual tanks.

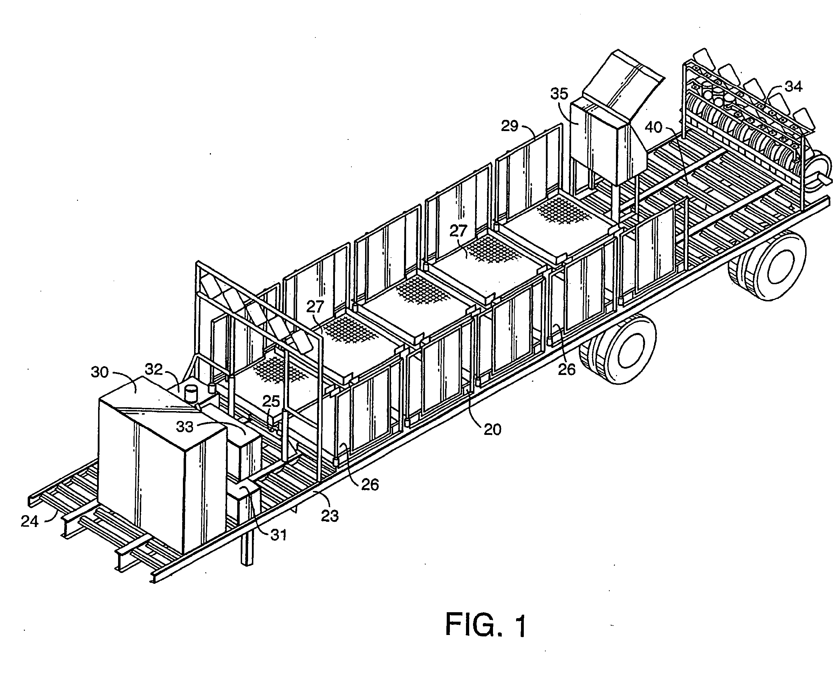

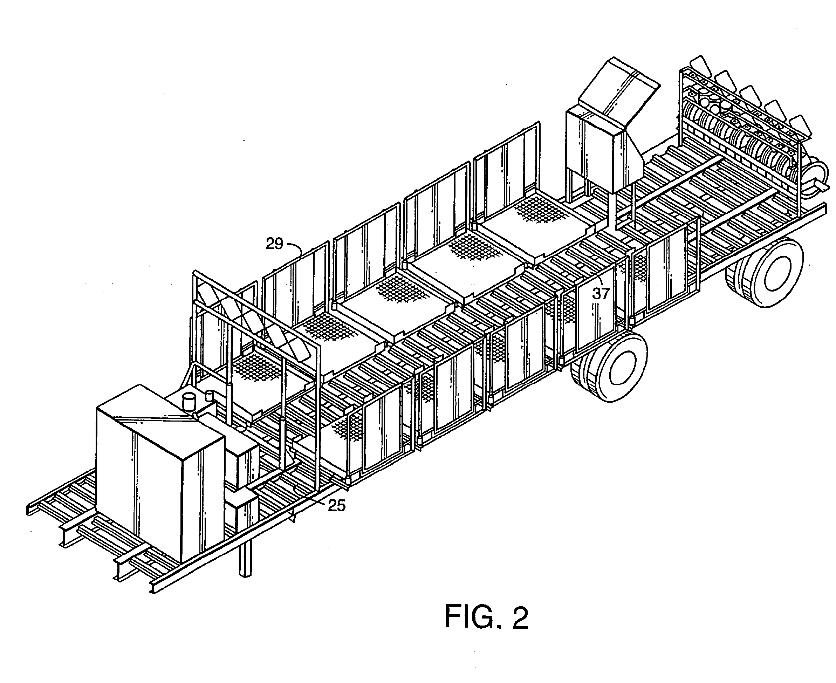

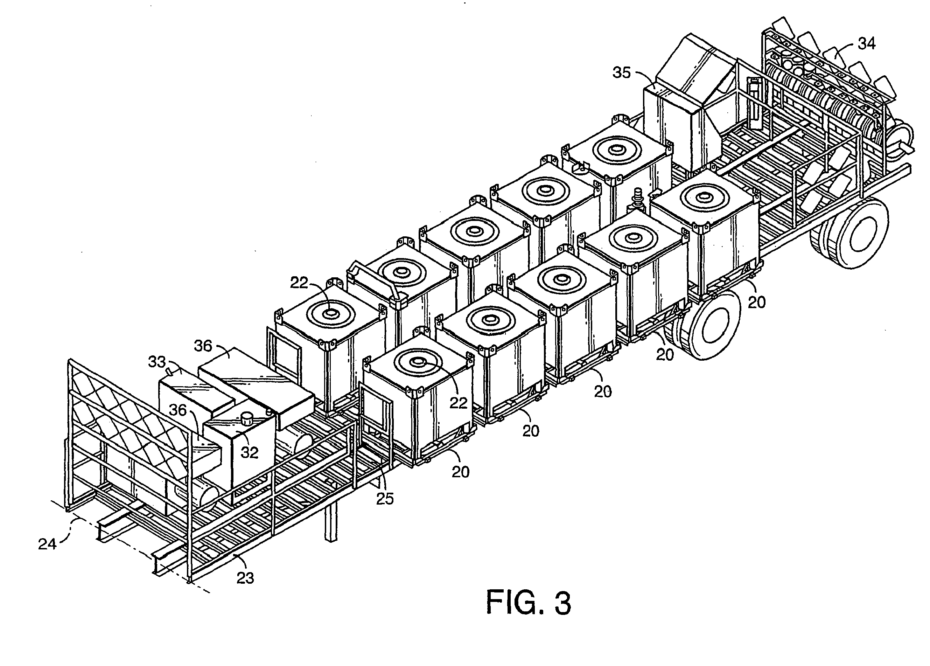

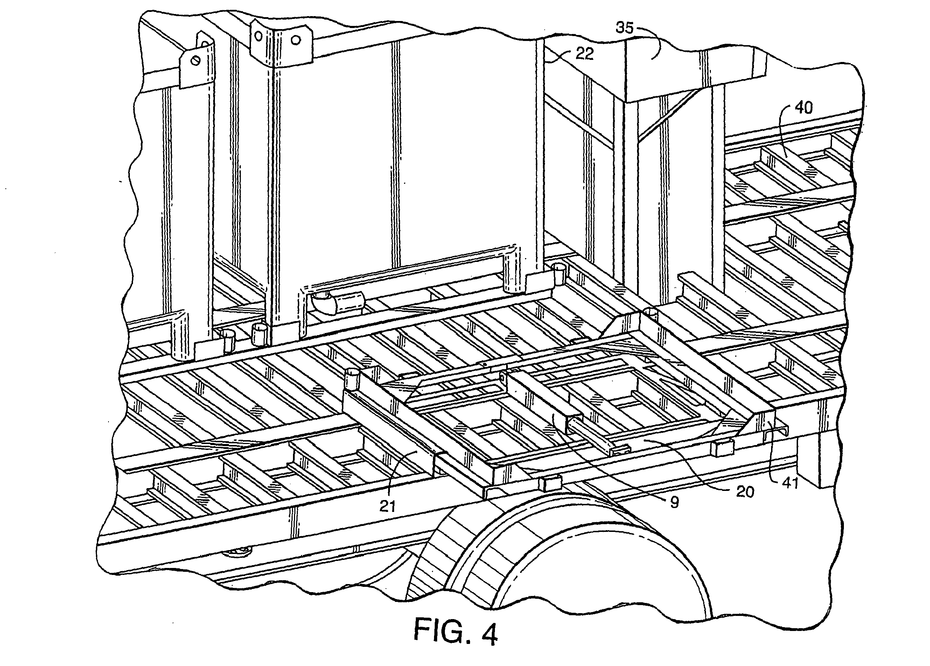

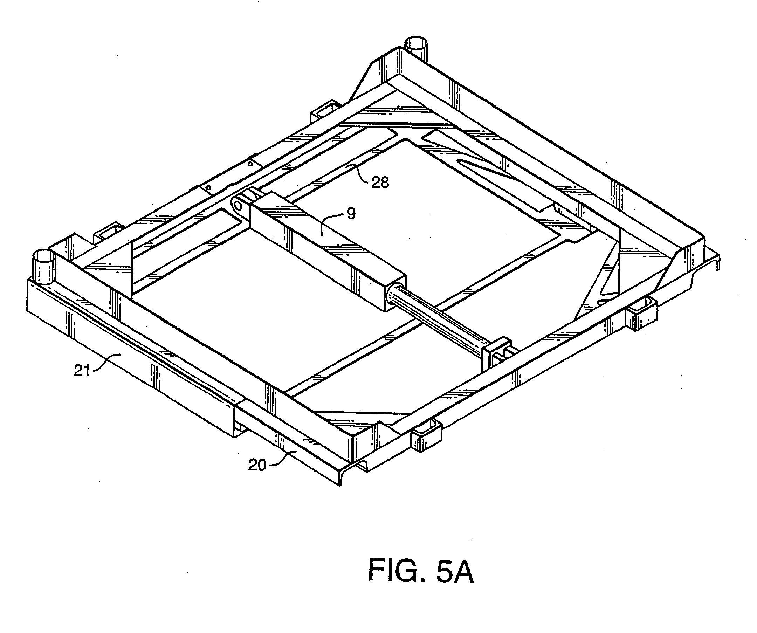

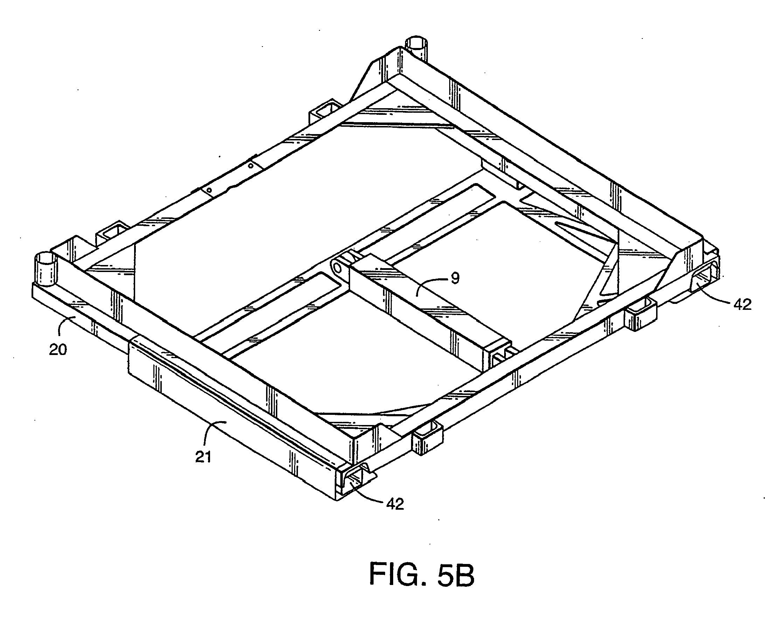

Some of the advantages of allowing a person to access the top of each tank by standing on the trailer deck is that the installation of an overhead walkway to access the tanks can be avoided and that there is less danger of injury from utilizing a ladder or other access platform. It is not intended that the present invention be limited to any particular number of trays or tanks. In some embodiments, the trailer may have five tank trays (20) on each side areas (26, 27) of the trailer as depicted in figure 1. For safety, the tank trays may hold rails (29) in place of tanks. The tank trays may be attached to the deck (25) of the trailer, and linear bearings (42, shown in figure 5B) allow the trays to be moved over the edge of the trailer creating a walking space/area (37) on the deck as show in figure 2. In further embodiments, application of pressure controlled by hydraulic valve slides chemical tanks (22) over the edge of the deck allowing a person to access the top of the tanks as depicted in Figure 3. In further embodiments, a tank tray (20) with a raised edge (41), linear bearing (42, shown in figure 5B), and hydraulic cylinder and piston (9) are configured such that the tank tray is hanging over the deck and the tank tray is attached to the deck of a trailer (40) and the hydraulic cylinder and piston (9) is positioned between the deck and the tank tray (20) as depicted in figure 4. The linear bearing casing (21) is attached to a rack (28) that can be connected to a deck or other platform as depicted in figure 5A. If a tank is placed in the tank tray, the system would allow one to walk along the rear near the tray on a platform without obstruction as the rack itself is not secured near the center area of the deck along the length of the deck in the walking area. In a closed position the hydraulic cylinder and piston pull the tank tray (and tank) back into the area of a platform as shown in figure 5B.

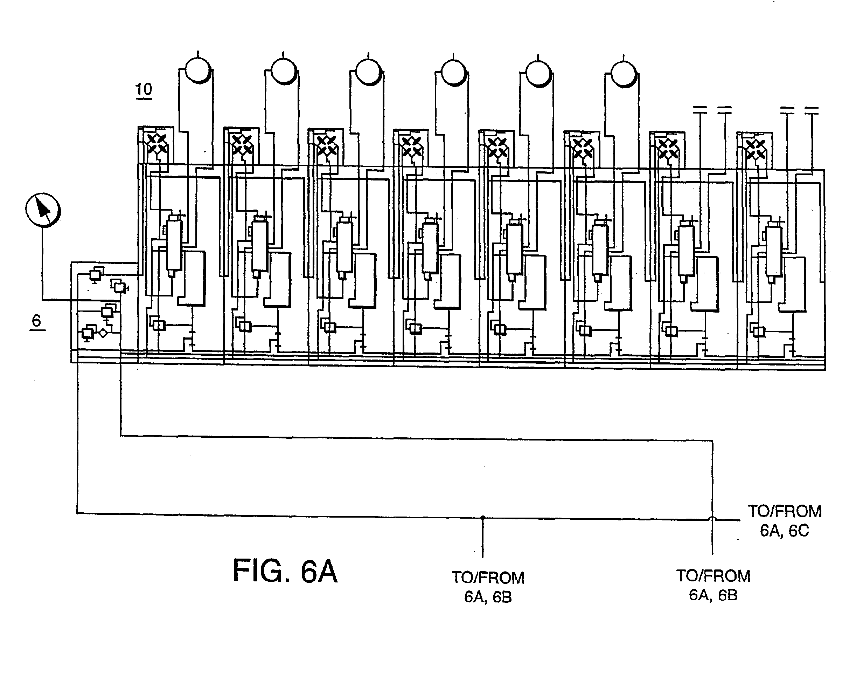

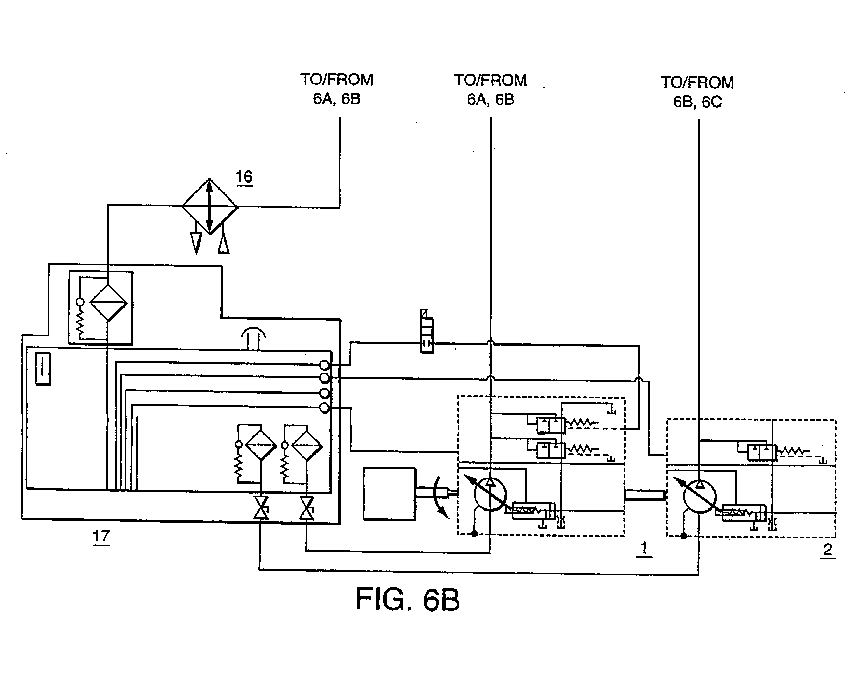

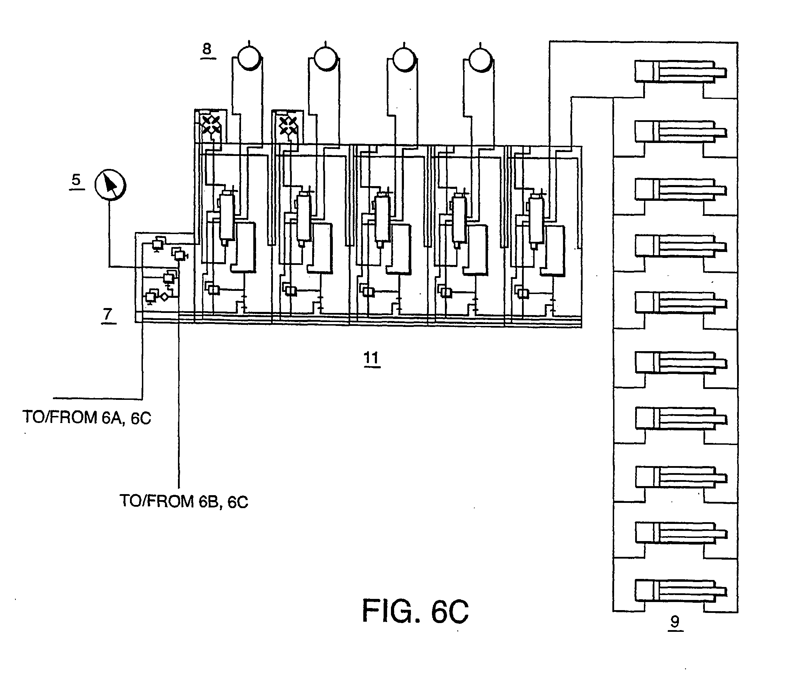

In some embodiments, a hydraulic system is used as depicted in figure 6. The hydraulic pumps (1) and (2) may be open loop. These pumps may be connected to a check valve cartridge and manifold block that acts as to isolate or combined fluid pressure. These may be further connected to hydraulic proportioning valves (6) and (7) connected to pressure gauges (5) that can power hydraulic stirrers (8) and the stroke cylinders and pistons (9) configured for moving tank trays. In addition, in further embodiments the system may contain a number of hydraulic motor and components for transferring chemicals contained in the tanks such as hydraulic motors (10), couplings of various bore and keyway sizes, 5/8: 3/16, 3/4 : 3/16, and 15/16 : 1/4, with Hytrel inserts. Fluid returning to the reservoir assembly (17) may be passed through coolers (16).

The term "bearing" and the like means a component used to reduce friction in a machine. A linear bearing allows motion along a straight line, for example a drawer being pulled out and pushed in. Common principles of operation include: sliding bearings, usually called "bushings", "journal bearings", "sleeve bearings", or "plain bearings"; rolling-element bearings such as ball and roller bearings; jewel bearings, in which the load is carried by rolling the axle slightly off-center; fluid bearings, in which the load is carried by a gas or liquid; magnetic bearings, in which the load is carried by a magnetic field; and flexure bearings, in which the motion is provided by a load element which bends.

The terms "tank" and the like means a container for holding or storing liquids, solids or gases. It is not intended that a tank be constructed in any particular shape or made up of any particular material.

The terms "tank tray" and the like means a receptacle with or without sides or a raised edge or rim, used for carrying and holding a tank.

The term "deck" and the like means a platform or surface. It is not necessary that the surface be uniform, and it may contain gaps or openings. For example, the platform may be designed as a grid with openings configured to permit support of properly sized tanks

The terms "deck having a maximum width" and the like means that the components that make up the deck are not substantially wider than the stated width along a majority of the length of the deck.

The term "hydraulic" and "hydraulic system" the like means a system moved by, or operated by a fluid, e.g., water, under pressure. A hydraulic pump means a mechanism for creating fluidic pressure. A hydraulic valve means a mechanism for altering the direction of fluidic pressure.

The term "trailer" means a transport vehicle designed to be hauled by a truck or tractor (e.g., truckbed).

The terms "trailer sufficient for transportation on a public highway" and the like means that the general design of the trailer satisfies applicable law regarding physical dimensions and characteristics in order to be driven on a public highway. It is not intended that that these terms requires the actual procurement of any applicable permits and/or licenses and/or the like.

In some embodiments, the chemical injection unit is an oil field fracturing chemical proportioning unit designed for continuous and homogenous proportioning of chemical additives into a fracturing slurry. In further embodiments, the unit is equipped with racks for tanks with 3500 gallons of chemical storage capacity. In further embodiments, the unit includes six, eight, or ten chemical injection pump systems and two transfer pumps. In further embodiments, the unit is designed for operation in harsh oilfield environments in temperature rages from 0 °C to 45 °C (32 °F to 113 °F).

In some embodiments, the invention relates to a trailer comprising a power unit, a rack system for chemical tanks, a hydraulic system, and a control and monitoring system.

In some embodiments, the invention relates to a distribution system comprising a chemical injection unit (34), a power unit (30), a rack for chemical tanks (20), chemical additive pumps, a hydraulic power system, a hydraulic reservoir (32), a suction housing, a pump housing, a diesel power unit (30), a fuel tank (31), diesel clean up reservoir (33) a control platform (40), a control console (35), a automated chemical control system, and a data acquisition system (see figure 1).

In some embodiments, an hydraulic reservoir (32), diesel clean-up reservoir (33) and two diesel power units (36) are installed on the trailer deck to provide hydraulic power to the chemical pumping system, and alternatively a rack configured for sliding chemical tanks (see figure 3). In further embodiments, the chemical pumping system comprises chemical pumps and distribution systems, fuel pumps, dry type air cleaners, and a radiator assembly.

In some embodiments, installed on each of the hydraulic pump drives are a hydraulic power system comprising an open loop pressure compensation system (see figure 6). The pressure ports of each system is combined to provide power to multi-section hydraulic stack valve assemblies designed to provide power control to chemical injection pumps, chemical tank stirrers, a progressive cavity transfer pump, chemical tank tray slides and others. In further embodiments, the hydraulic circuit comprises a hydraulic reservoir, a hydraulic filtration for open loop common return lines, and hydraulic proportional valves.

In another embodiment, the trailer unit contains a rack system for ten chemical 350 gallon tote tanks comprising valve outlets, fill ports, and level indicators configure such that all tote tanks are accessible from the walkway allowing access to all chemical suction valves and tank level indicators. The trailer deck acts as the control platform and tank access deck. In preferred embodiments, on-slip safety flooring is placed in the walkway. Removable handrails can be used to replace any missing tank for safety.

In some embodiments, the control console comprises power unit controls further comprising engine gauges, engine idle/run mode throttle switches, engine starter switches, engine normal kill switches, hydraulic pressure gauges and hydraulic temperature gauges. The control console also comprises a liquid chemical pump system control comprising manual pump speed controls, polymer tank mixing auger speed controls, and chemical tank slide controls.

In some embodiments, the chemical control system allows the operator to program job profiles prior to the job and reset control points during the job for automatic proportional injection of chemicals. System programming can be done from the unit mounted operator interface display or from an optional remote mounted panel. The automatic chemical control system is used to ratio chemicals under changing flow rate conditions. The automatic chemical control system determines the desired chemical flow-rate based on the flow rate of the unit or units that the chemicals are being injected into (blender or hydration unit) and operator defined chemical ratio. The controls will automatically vary the hydraulic flow to the chemical hydraulic motors through an electro-hydraulic controller in order to match the actual chemical rate to the desired chemical rate.

In another embodiment, the float deck trailer comprises a maximum width of eight feet and six inches.

As depicted in figures 3 and 4 in some embodiments, the invention relates to a chemical distribution system comprising: a) a trailer comprising a deck area (25) with a width (24) and a length (23); b) a plurality of chemical tank tray slides (20); and c) a plurality of cylinders and pistons (9); wherein said plurality of said cylinders and pistons are configured between said trailer deck (25) and said plurality of chemical tank tray slides (20); and wherein application of pressure inside said cylinder slides at least one of said plurality of chemical tank tray slides over said deck area. It is contemplated that the cylinders and pistons used to slide the chemical tank tray slides can be controlled by hydraulic (liquid), pneumatic (air), a flowing solid means, or electric/ magnetic forces or expansion between physical states. It is also contemplated that the chemical tank tray slides, whether containing the chemical tanks or not, can be moved out of the area of the deck by hanging them over the edge of the deck. Preferably this is accomplished on the side of the trailer by providing a linear motion parallel with the width of the deck.

As depicted in figures 3 and 4 in some embodiments, the invention relates to a chemical distribution system comprising: a) a trailer comprising a deck area (25) with a width (24) and a length (23); b) a plurality of chemical tank trays (20); and c) a plurality of linear bearings (42, shown in figure 5B); wherein said plurality of linear bearings are configured such that one can push at least one of said plurality of chemical tank tray slides outside of said deck area. It is contemplated that the linear bearings may comprise a freely rotatable ball partially embedded in the deck of the trailer. It is also contemplated that movement of the chemical tank tray slide or chemical tanks inside of a tray slide can be moved without the use of an automated device.

As depicted in figures 3 and 6 in some embodiments, the invention relates to a chemical distribution system comprising: a) a trailer sufficient for transportation on a public highway comprising a deck having a maximum width of eight feet six inches; b) a plurality of chemical tanks (22); c) a plurality of chemical tank tray slides (20); and d) a hydraulic system comprising i) a hydraulic pump (1); ii) a hydraulic valve (7); and iii) a plurality of hydraulic cylinders and pistons (9); wherein said plurality of chemical tank tray slides (20) secure said plurality of said chemical tanks (22) to said deck (25); wherein said plurality of said hydraulic cylinders and pistons are configured between said trailer deck and said plurality of chemical tank tray slides; wherein application of pressure controlled by said hydraulic valve slides at least one of said plurality of chemical tanks over said maximum width of said deck.

As depicted in figures 1 and 3 in some embodiments, the invention relates to a chemical distribution system comprising: a) a trailer sufficient for transportation on a public highway comprising a deck having a length and a width which is a maximum of eight feet six inches said width comprising a first area running along a right side edge of said length and a second area running along a left side edge of said length; b) a first plurality of chemical tanks and a second plurality of chemical tanks; c) a first plurality of chemical tank tray slides and a second plurality of chemical tank slides; and d) a hydraulic system comprising i) a hydraulic pump; ii) a hydraulic valve; and iii) a plurality of hydraulic cylinders and pistons; wherein said first plurality of chemical tank tray slides secure said first plurality of said chemical tanks to said first area (26); wherein said second plurality of chemical tank tray slides secure said second plurality of said chemical tanks to said second area (27); wherein said plurality of said hydraulic cylinders and pistons are configured between said trailer deck and said first and second plurality of chemical tank tray slides; and wherein application of pressure controlled by said hydraulic valve slides at least one of said first and second plurality of chemical tanks over said maximum width of said deck.

It is not intended that the present invention be limited to precise dimensions of the platform or deck. In another embodiment, the invention relates to a chemical distribution system comprising: a) a deck having a length and a width which is a maximum of eight feet six inches said width comprising a first area running along a right side edge of said length and a second area running along a left side edge of said length; b) a plurality of roller bearings; c) a first plurality of chemical tanks and a second plurality of chemical tanks; d) a first plurality of chemical tank tray slides and a second plurality of chemical tank slides; wherein said first plurality of chemical tank tray slides secure said first plurality of said chemical tanks to said first area; wherein said second plurality of chemical tank tray slides secure said second plurality of said chemical tanks to said second area; wherein said roller bearings are configured between said trailer deck and said first and second plurality of chemical tank tray slides; and wherein application of pressure slides at least one of said first and second plurality of chemical tanks over said maximum width of said deck.

In some embodiments, the invention relates to a chemical distribution system comprising: a) a trailer comprising a deck area with a width and a length; b) a plurality of chemical tank tray slides; and c) a plurality of cylinders and pistons; wherein said plurality of said cylinders and pistons are configured between said trailer deck and said plurality of chemical tank tray slides; and wherein application of pressure inside said cylinder slides at least one of said plurality of chemical tank tray slides over said deck area. In further embodiments, less than half of the tray or tank is moved outside the area of the deck preferably less than a quarter.

In another embodiment, the invention relates to a chemical distribution system comprising: a) a trailer comprising a deck area with a width and a length; b) a plurality of chemical tank tray slides; and c) a plurality of linear bearings; wherein said plurality of linear bearings are configured such that one can push at least one of said plurality of chemical tank tray slides outside of said deck area.

In another embodiment, the invention relates to a chemical distribution system comprising: a) a trailer sufficient for transportation on a public highway comprising a deck having a maximum width of eight feet six inches; b) a plurality of chemical tanks; c) a plurality of chemical tank tray slides; and d) a hydraulic system comprising i) a hydraulic pump; ii) a hydraulic valve; and iii) a plurality of hydraulic cylinders and pistons; wherein said plurality of chemical tank tray slides secure said plurality of said chemical tanks to said deck; wherein said plurality of said hydraulic cylinders and pistons are configured between said trailer deck and said plurality of chemical tank tray slides; wherein application of pressure controlled by said hydraulic valve slides at least one of said plurality of chemical tanks over said maximum width of said deck.

In another embodiment, the invention relates to a chemical distribution system comprising: a) a trailer sufficient for transportation on a public highway comprising a deck having a length and a width which is a maximum of eight feet six inches said width comprising a first area running along a right side edge of said length and a second area running along a left side edge of said length; b) a first plurality of chemical tanks and a second plurality of chemical tanks; c) a first plurality of chemical tank tray slides and a second plurality of chemical tank slides; and d) a hydraulic system comprising i) a hydraulic pump; ii) a hydraulic valve; and iii) a plurality of hydraulic cylinders and pistons; wherein said first plurality of chemical tank tray slides secure said first plurality of said chemical tanks to said first area; wherein said second plurality of chemical tank tray slides secure said second plurality of said chemical tanks to said second area; wherein said plurality of said hydraulic cylinders and pistons are configured between said trailer deck and said first and second plurality of chemical tank tray slides; and wherein application of pressure controlled by said hydraulic valve slides at least one of said first and second plurality of chemical tanks over said maximum width of said deck.

In another embodiment, the invention relates to a chemical distribution system comprising: a) a deck having a length and a width which is a maximum of eight feet six inches said width comprising a first area running along a right side edge of said length and a second area running along a left side edge of said length; b) a plurality of roller bearings; c) a first plurality of chemical tanks and a second plurality of chemical tanks; d) a first plurality of chemical tank tray slides and a second plurality of chemical tank slides; wherein said first plurality of chemical tank tray slides secure said first plurality of said chemical tanks to said first area; wherein said second plurality of chemical tank tray slides secure said second plurality of said chemical tanks to said second area; wherein said roller bearings are configured between said trailer deck and said first and second plurality of chemical tank tray slides; and wherein application of pressure slides at least one of said first and second plurality of chemical tanks over said maximum width of said deck.

In another embodiment, the invention relates to a chemical distribution system comprising: a) a trailer comprising a deck area with a width and a length; b) a plurality of platforms; c) a plurality of cylinders and pistons; and d) a plurality of chemical tanks; wherein said plurality of said cylinders and pistons are configured between said trailer deck and said plurality of platforms and wherein application of pressure inside said plurality of cylinders and pistons slides at least one of said plurality of chemical tanks outside of said deck area.

In another embodiment, the invention relates to a chemical distribution system comprising: a) a trailer comprising a deck area with a width and a length; b) a plurality of platforms; c) a plurality of cylinders and pistons; d) a plurality of chemical tanks wherein said plurality of said cylinders and pistons are configured between said trailer deck and said plurality of platforms; wherein application of pressure inside said cylinder slides at least one of said plurality of chemical tanks over said deck area.

In some embodiments, the invention relates to a method comprising: providing a distribution system disclosed herein and sliding a tank over the edge of a platform.

In some embodiments, the invention relates to a method comprising: providing a system for moving and supporting containers comprising: a) a plurality of trays, each configured to support a container; b) a track for transporting said trays over a platform; and sliding a tank over the edge of a platform. In further embodiments, said track comprises a conveyor track. In further embodiments, said track comprises rollers. In further embodiments, said track is coupled to a platform. In further embodiments, said platform is a trailer.

In some embodiments, the invention relates to a method comprising: a) providing chemical distribution system comprising: i) a trailer sufficient for transportation on a public highway comprising a deck; ii) a plurality of chemical tank trays; iii) a hydraulic system comprising a plurality of hydraulic cylinders and pistons; wherein said plurality of said hydraulic cylinders and pistons are configured between said trailer deck and said plurality of chemical tank trays; and wherein application of pressure controlled by said hydraulic valve slides at least one of said plurality of chemical tank trays over a edge of said deck and b) sliding a tank over said deck.

In some embodiments, the invention relates to a method comprising: a) providing a chemical distribution system comprising: i) a trailer sufficient for transportation on a public highway comprising a deck having a first area running along a right side edge of said deck and a second area running along a left side edge of said deck; ii) a first plurality of chemical tanks and a second plurality of chemical tanks; iii) a first plurality of chemical tank trays and a second plurality of chemical tank trays; iv) a hydraulic system comprising a plurality of hydraulic cylinders and pistons; wherein said first plurality of chemical tank trays secure said first plurality of said chemical tanks to said first area; wherein said second plurality of chemical tank tray slides secure said second plurality of said chemical tanks to said second area; wherein said plurality of said hydraulic cylinders and pistons are configured between said trailer deck and said first and second plurality of chemical tank trays; and wherein application of pressure controlled by said hydraulic valve slides at least one of said first plurality of chemical tanks over said right side edge of said deck and application of pressure controlled by said hydraulic valve slides at least one of said second plurality of tanks over said left side edge of said deck; and b) sliding at least one tank over said edge of said deck.

In some embodiments, the invention relates to a method comprising: providing a chemical distribution system comprising: a) a deck having a first area running along a right side edge of the deck and a second area running along a left side edge of the deck; b) a plurality of linear bearings; c) a first plurality of chemical tanks and a second plurality of chemical tanks; and d) a first plurality of chemical tank trays and a second plurality of chemical tank trays; wherein said first plurality of chemical tank trays secure said first plurality of said chemical tanks to said first area; wherein said second plurality of chemical tank trays secure said second plurality of said chemical tanks to said second area; wherein said linear bearings are configured between said trailer deck and said first and second plurality of chemical tank trays; and wherein application of sufficient force to said first plurality of chemical tanks slides at least one of said first plurality of chemical tanks over said right side edge of said deck and application of sufficient force to said second plurality of tank slides at least one of said second plurality of tanks over said left side edge of said deck; and sliding at least one chemical tank over the edge of said deck.

In some embodiments, the invention relates to a method accessing chemical tanks on a trailer comprising: a) providing a trailer comprising a deck, a plurality of chemical tanks, a plurality of chemical tank trays holding said plurality of chemical tanks, a plurality of linear bearings attached to a rack wherein said rack is attached to said deck, b) resting said plurality of chemical tanks entirely within an area of said deck; and c) moving a portion of said tanks over the area of said deck.

## Claims

1. A chemical distribution system comprising:
a) a trailer sufficient for transportation on a public highway comprising a deck;
b) a plurality of chemical tank trays;
c) a hydraulic system comprising a plurality of hydraulic cylinders and pistons;
wherein said plurality of said hydraulic cylinders and pistons are configured between said trailer deck and said plurality of chemical tank trays; and
wherein application of pressure controlled by said hydraulic valve slides at least one of said plurality of chemical tank trays over a edge of said deck.

2. A chemical distribution system comprising:
a) a trailer sufficient for transportation on a public highway comprising a deck having
a first area running along a right side edge of said deck and
a second area running along a left side edge of said deck;
b) a first plurality of chemical tanks and a second plurality of chemical tanks;
c) a first plurality of chemical tank trays and a second plurality of chemical tank trays
d) a hydraulic system comprising a plurality of hydraulic cylinders and pistons;
wherein said first plurality of chemical tank trays secure said first plurality of said chemical tanks to said first area;
wherein said second plurality of chemical tank tray slides secure said second plurality of said chemical tanks to said second area;
wherein said plurality of said hydraulic cylinders and pistons are configured between said trailer deck and said first and second plurality of chemical tank trays; and
wherein application of pressure controlled by said hydraulic valve slides at least one of said first plurality of chemical tanks over said right side edge of said deck and application of pressure controlled by said hydraulic valve slides at least one of said second plurality of tanks over said left side edge of said deck.

3. A chemical distribution system comprising:
a) a deck having
a first area running along a right side edge of the deck and
a second area running along a left side edge of the deck;
b) a plurality of linear bearings;
c) a first plurality of chemical tanks and a second plurality of chemical tanks; and
d) a first plurality of chemical tank trays and a second plurality of chemical tank trays;
wherein said first plurality of chemical tank trays secure said first plurality of said chemical tanks to said first area;
wherein said second plurality of chemical tank trays secure said second plurality of said chemical tanks to said second area;
wherein said linear bearings are configured between said trailer deck and said first and second plurality of chemical tank trays; and
wherein application of sufficient force to said first plurality of chemical tanks slides at least one of said first plurality of chemical tanks over said right side edge of said deck and application of sufficient force to said second plurality of tank slides at least one of said second plurality of tanks over said left side edge of said deck.
